# EUROPEAN PATENT SPECIFICATION

(11) **EP 2 922 331 B1**
(45) Date of publication and mention of the grant of the patent: **17.05.2017**
(21) Application number: 13854804.5
(22) Date of filing: 11.11.2013
(51) Int. Cl.: H04W 24/04, H04L 29/14, H04W 60/00

(54) **METHOD AND SYSTEM FOR PERFORMING DUAL-HOMING AUTOMATIC SWITCHING DECISION ACCORDING TO THE NUMBER OF REGISTERED GATEWAYS**
VERFAHREN UND SYSTEM ZUR DURCHFÜHRUNG EINER AUTOMATISCHEN DUAL-HOMING-UMSCHALTUNGSENTSCHEIDUNG GEMÄSS DER ANZAHL REGISTRIERTER GATEWAYS
PROCÉDÉ ET SYSTÈME POUR EXÉCUTER UNE DÉCISION DE COMMUTATION AUTOMATIQUE PAR CONNEXION À DOUBLE ANNEAU, EN FONCTION DU NOMBRE DE PASSERELLES ENREGISTRÉES

(30) Priority: 13.11.2012 CN 201210453981
(43) Date of publication of application: 23.09.2015
(73) Proprietor: ZTE Corporation, Shenzhen, Guangdong 518057 (CN)
(72) Inventor: SUN, Xiaoyong, Shenzhen Guangdong 518057 (CN); HU, Yingying, Shenzhen Guangdong 518057 (CN)
(74) Representative: HGF Limited
(86) International application number: PCT/CN2013/086895
(87) International publication number: WO 2014/075596

(56) References cited:
- EP-A1- 1 895 785
- CN-A- 1 856 128
- CN-A- 101 883 327
- CN-A- 102 970 700
- US-A1- 2012 106 318
- Timur Mamatkhodjaev: "ZTE MOBILE SOLUTIONS ZTEMOBILESOLUTIONS NOVEMBER 2008 TIMURMAMATKHODJAEV ZTECORPORATION,UZBEKISTAN", , 30 November 2008 (2008-11-30), pages 1-26, XP055230009, Retrieved from the Internet: URL:https://www.itu.int/ITU-D/tech/events/ 2008/TashkentNovember2008/Presentations/Ta shkent_Nov08_File18.pdf [retrieved on 2015-11-20]

## Description

### TECHNICAL FIELD

The present disclosure relates to a soft switching dual-homing disaster recovery technique, and specifically describes a method and a system about how to judge and trigger automatic switching between a dual-homing master server and a dual-homing slave server.

### BACKGROUND

With widespread application and gradual maturing of a dual-homing disaster recovery technique in a soft switching system, a requirement for security and reliability of a dual-homing technique becomes increasingly higher. The security and the reliability of dual-homing automatic switching judgment determines whether switching is necessary or not, whether an opportunity is accurate or not, whether impact on a system can be weakened maximally or not, so as to guarantee stability of a soft switching service.

An existing common judgment method includes that, when the heartbeat coupling between a master server and a slave server is abnormal, an original slave server opens a Mc interface and waits for registration of a gateway, and after the gateway is successfully registered, a MASTER state is started to complete MASTER-SLAVE switching.

This method judges the timing of transferring from the SLAVE state to the MASTER state according to a state of the Mc interface, and fails to decide system availability from a global perspective, and a misjudgment rate is high in a situation in which a short-time exception emerges in a dual-homing master server, and an abnormal situation, such as a dual-MASTER state and etc., is also generated easily. For example, in the situation in which heartbeat coupling exception and a communication exception between a certain service gateway and the master server emerge simultaneously, unnecessary switching may occur because a switching judgment condition is met. Also for example, provided that the original slave server has entered into the MASTER state because the Mc interface is activated, while at this moment an original master server has just been recovered from an abnormal situation and a remaining gateway can be registered smoothly, then the dual-MASTER state may then emerge.

EP1895785 A1 discloses a method for realizing dual home of mobile switching center. A method for implementing Mobile Switch Center (MSC) dual homing includes: dividing a physical MSC Server into more than one virtual MSC Servers; establishing dual homing relations between different virtual MSC Servers and different physical MSC Servers, setting the state of the virtual MSC Servers as idle; determining whether to switch by the MSC Server via heartbeat detection; if it is needed to switch, setting the state of virtual MSC Server as activate; otherwise, proceeding to normal work and detection. The scheme may implement the Mobile Switch Center (MSC) dual homing, and improve the reliability of mobile communication network; the implementation is simple and flexible.

US 2012/0106318 A1 discloses a method for implementing dual-homing, including: setting each one of any two core control equipment as a standby for each other, connecting a network entity belonging to one of the core control equipment with the two core control equipment through a primary link and a standby link respectively; setting the primary link connected with the core control equipment as activated, and setting the standby link connected with the core control equipment inactive; determining whether the core control equipment corresponding to the primary link is out of service, if the core control equipment corresponding to the primary link is out of service, activating the standby link; otherwise, continuously determining whether the core control equipment corresponding to the primary link is out of service. The invention also discloses another method for implementing dual-homing, by which the reliability of the network can be improved.

As can be seen from above, the determination process on whether to perform switch between two servers is relatively simple, and thus misjudgement rate is high. There is a demand for a solution which can achieve low misjudgement rate.

### SUMMARY

The present disclosure is to provide a method for performing dual-homing automatic switching judgment according to the number of registered Media Gateways (MGWs), aiming at solving a technical problem that a misjudgment rate is high in the related art.

In order to implement the purpose of the present disclosure, the present disclosure provides a method for performing dual-homing automatic switching judgment according to the number of registered Media Gateways, which may include the following steps:
triggering, by a master server, a switching judgment mechanism about whether to transfer a state of the master server into a SLAVE state when the master server detects that heartbeat coupling between the master server and the slave server is interrupted, wherein the master server operates a plurality of MGWs, and the slave server takes over responsibility of the plurality of MGWs when a state of the slave server is transferred into a MASTER state; and
detecting, by the slave server, the number of MGWs registered to the slave server when the slave server detects that heartbeat coupling between the master server and the slave server is interrupted, and if the detected number of the MGWs reaches a threshold, then transferring the state of the slave server into the MASTER state to make the slave server take over responsibility of the plurality of MGWs.

Preferably, the step of triggering, by a master server, a switching judgment mechanism about whether to transfer a state of the master server into a SLAVE state when the master server detects that heartbeat coupling between the master server and the slave server is interrupted may include:
when the master server detects that a heartbeat is interrupted, starting a dual-homing state management timer timerDHStatus and a media gateway registration detection timer timerMGWReg, and when the timerDHStatus is overtime and the number of the registered MGWs is 0, transferring the master server into a SLAVE state, closing a Mc interface, and driving a gateway to the slave server.

Preferably, the step of detecting, by the slave server, the number of the MGWs registered to the slave server when the slave server detects that the heart coupling between the master server and the slave server is interrupted, and if the number of the MGWs reaches the threshold, then transferring the state of the slave server into the MASTER state to make the slave server take over the responsibility of the plurality of MGWs may include:
starting a timer timerMGWReg in the slave server, triggering cycle detection of the number of the registered MGWs, and when the number of the registered MGWs is equal to a preset media gateway number threshold countActiveMGW, transferring the slave server into the MASTER state.

Preferably, the step of detecting, by the slave server, the number of the MGWs registered to the slave server when the slave server detects that the heartbeat coupling between the master server and the slave server is interrupted, and if the number of the MGWs reaches the threshold, then transferring the state of the slave server into the MASTER state to make the slave server take over the responsibility of the plurality of MGWs may include:
detecting, by the slave server, a heartbeat between the slave server and another server; and
when the slave server detects that the heartbeat is interrupted, starting a timer timerDHStatus in the slave server; if the timer is overtime, then transferring the slave server into a TEMP state, and in the TEMP state, opening a Mc interface and waiting for registration of the MGW; and starting a timer timerMGWReg and the timer timerDHStatus, triggering cycle detection of the number of the registered MGWs through the timer timerMGWReg; when the number of the registered MGWs is equal to a threshold countActiveMGW, transferring the slave server into the MASTER state; if the timer timerDHStatus is overtime, then switching from the TEMP state back to the SLAVE state, and at this time, closing the Mc interface and driving the MGW to another server of a dual-homing system.

Preferably, the above method may further include:
in a non-switching phase, if it is detected that the number of actually registered MGWs is not in accord with a threshold countActiveMGW, giving a security alarm; or
when it is detected that a countActiveMGW configured for the master server is not in accord with a countActiveMGW configured for the slave server, giving a security alarm.

The present disclosure further provides a system for performing dual-homing automatic switching judgment according to the number of registered MGWs, which may include a master server and a slave server, wherein
the master server is provided with a switching judgment mechanism judgment module which is configured to, when it is detected that heartbeat coupling between the master server and the slave server is interrupted, trigger a switching judgment mechanism about whether to transfer a state of the master server into a SLAVE state, wherein the master server operates a plurality of MGWs, and the slave server takes over responsibility of the plurality of MGWs when a state of the slave server is transferred into a MASTER state; and
the slave server is provided with a switching judgment mechanism execution module which is configured to detect the number of MGWs registered to the slave server when the slave server detects that heartbeat coupling between the master server and the slave server is interrupted, and if the detected number of the MGWs reaches a threshold, then transfer the state of the slave server into the MASTER state to make the slave server take over responsibility of the plurality of MGWs.

Preferably, the switching judgment mechanism judgment module may be further configured to when it is detected that a heartbeat is interrupted, start a dual-homing state management timer timerDHStatus and a media gateway registration detection timer timerMGWReg, and when the timerDHStatus is overtime and the number of the registered MGWs is 0, transfer the master server into a SLAVE state, close a Mc interface, and drive a gateway to the slave server.

Preferably, the switching judgment mechanism execution module may be further configured to start a timer timerMGWReg in the slave server, trigger cycle detection of the number of the registered MGWs, and when the number of the registered MGWs is equal to a preset media gateway number threshold countActiveMGW, transfer the slave server into the MASTER state.

Preferably, the slave server may further include:
a heartbeat detection module, configured to detect a heartbeat between the slave server and another server; and
the switching judgment mechanism execution module may be further configured to: when it is detected that the heartbeat is interrupted, start a timer timerDHStatus in the slave server; if the timer is overtime, then transfer the slave server into a TEMP state, and in the TEMP state, open a Mc interface and wait for registration of the MGW; and start a timer timerMGWReg and the timer timerDHStatus, trigger cycle detection of the number of the registered MGWs through the timer timerMGWReg; when the number of the registered MGWs is equal to a threshold countActiveMGW, transfer the slave server into the MASTER state; if the timer timerDHStatus is overtime, then switch from the TEMP state back to the SLAVE state, and at this time, close the Mc interface and drive the MGW to another server of a dual-homing system.

Preferably, the above system may further include an alarm device, configured to: in a non-switching phase, if it is detected that the number of actually registered MGWs is not in accord with a threshold countActiveMGW, give a security alarm; or
when it is detected that a countActiveMGW configured for the master server is not in accord with a countActiveMGW configured for the slave server, give a security alarm.

The present disclosure judges the number of registered MGWs and then performs switching just when the number of the MGWs registered with the slave server exceeds a threshold. This method is proposed from a full-system perspective to implement soft switching, which can decide safely and effectively a switching timing and avoid a defect of an existing method. On a premise that extra system consumption is not generated, abnormal switching or a dual-MASTER state caused in a situation in which a slave server gets a transient failure, and exceptions of heartbeat coupling and Mc interface coupling emerge simultaneously, and etc., is solved, and security and robustness of a switching judgment method are improved.

### BRIEF DESCRIPTION OF THE DRAWINGS

Fig. 1 is a flowchart of a method for performing dual-homing automatic switching judgment according to the number of registered MGWs in one embodiment of the present disclosure;
Fig. 2 is schematic view of a switching mechanism of a dual-homing server among a MASTER state, a SLAVE state, and a TEMP state in one embodiment of the present disclosure; and
Fig. 3 is a module structure view of a device for performing dual-homing automatic switching judgment according to the number of registered MGWs in one embodiment of the present disclosure.

Implementation of a purpose of the present disclosure, a function feature, and an advantage will be further explained in combination with the embodiments and with reference to accompanied drawings.

### DETAILED DESCRIPTION

It shall be understood that specific embodiments described here are only used to interpret the present disclosure and are not used to limit the present disclosure.

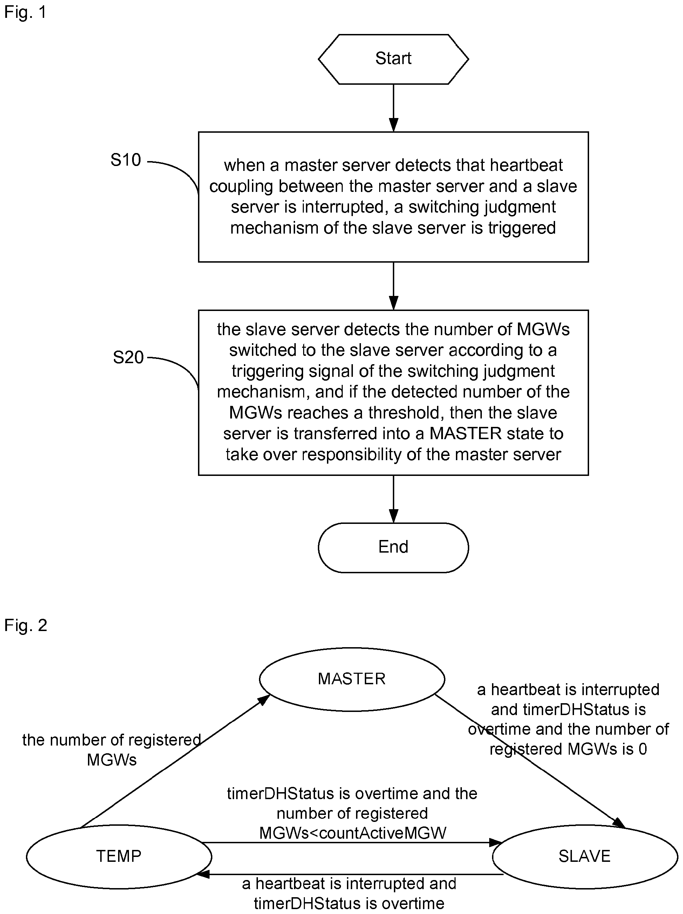

With reference to Fig. 1, Fig. 1 is a flowchart of a method for performing dual-homing automatic switching judgment according to the number of registered MGWs in one embodiment of the present disclosure. In the embodiment of the present disclosure, the method for performing dual-homing automatic switching judgment according to the number of registered MGWs includes the following steps:
Step S10, when a master server detects that heartbeat coupling between the master server and a slave server is interrupted, a switching judgment mechanism about whether to transfer a state of the master server into a MASTER state is triggered, wherein the master server operates a plurality of MGWs, and the slave server takes over responsibility of the plurality of MGWs when a state of the slave server is transferred into a MASTER state; and
Step S20, the slave server detects the number of MGWs registered to the slave server when the slave server detects that the heartbeat coupling between the master server and the slave server is interrupted, and if the detected number of the MGWs reaches a threshold, then the slave server is transferred into the MASTER state to take over responsibility of the plurality of MGWs. In the embodiment of the present disclosure, the threshold of the number of MGWs is an integer which is larger than 0.

Specifically, a system application scene of the present disclosure is exampled as follows:
A dual-homing disaster recovery system is composed of a Mobile Switching Center (MSC) MSCA and an MSC MSCB of a certain city, wherein the MSCA is a MASTER, and the MSCB is a SLAVE. A threshold countActiveMGW of the number of operating MGWs is set as 3. Four MGWs governed by MSCA and MSCB are MGW1, MGW2, MGW3, and MGW4 separately. One day, MGW1 generates a network failure and quits a service. After MSCA detects that MGW1 fails, MSCA detects a state of a heartbeat between MSCA and MSCB, and if the heartbeat state is normal, then MSCA does not trigger the switching judgment mechanism of the slave server, and switching will not occur; if the heartbeat state is abnormal, then MSCA judges the states of MGW1, MGW2, MGW3, and MGW4, and if MSCA discovers that only MGW1 is abnormal, then MSCA does not close a Mc interface and is degraded to a SLAVE state. At the same time, after MSCB detects that a heartbeat is abnormal, MSCB may open the Mc interface and wait for registration of a gateway, and if a network from MGW1 to MSCB is normal and MGW1can be registered with MSCB, but the number of the operating MGWs is not equal to 3, then MSCB will not be switched to the MASTER state, and MSCB may open and close the Mc interface periodically. After the network from MGW1 to MSCA is recovered to a normal state, MGW1 will be registered with MSCA again, avoiding unnecessary switching.

The present disclosure judges the number of registered MGWs and then performs switching just when the number of the MGWs registered with the slave server exceeds a threshold. This method is proposed from a full-system perspective to implement soft switching, which can decide safely and effectively a switching timing and avoid a defect of an existing method. On a premise that extra system consumption is not generated, abnormal switching or a dual-MASTER state caused in a situation in which a slave server gets a transient failure, and exceptions of heartbeat coupling and Mc interface coupling emerge simultaneously, and etc., is solved, and security and robustness of a switching judgment method are improved.

In the embodiment of the present disclosure, in order to implement automatic switching judgment according to the number of registered MGWs, several parameters below are needed to be preset in the master server and the slave server:

### 1. The number of MGWs put into operation: countActiveMGW

This is a dual-homing automatic switching judgment threshold. When the number of MGWs registered to an MSCServer reaches the number of MGWs put into operation, then the MSCServer is transferred into a MASTER state, otherwise the MSCServer is in a SLAVE state;

### 2. A dual-homing state management timer: timerDHSatus

This timer is for controlling state transfer of a dual-homing server. When a dual-homing heartbeat is interrupted, the timerDHStatus is started, and transfer among the MASTER state, the SLAVE state, and a TEMP state is triggered after it is overtime;

### 3. An MGW registration detection timer: timerMGWReg

This timer controls detection of the number of registered MGWs by the dual-homing server. The timerMGWReg is started in two situations: one is that a server is in the MASTER state and the heartbeat is interrupted, and the other is that the server is transferred into the TEMP state. When it is detected in the TEMP state that the number of registered MGWs=countActiveMGW, the timerMGWReg is stopped.

The above Step S10 may specifically include: when it is detected that the heartbeat is interrupted, the dual-homing state management timer timerDHStatus and the media gateway registration detection timer timerMGWReg are started; when the timerDHStatus is overtime and the number of the registered MGWs is 0, then the master server is transferred into the SLAVE state, the Mc interface is closed, and the gateway is driven to the slave server. For example, when the master server discovers that the heartbeat is interrupted, the timerDHStatus and the timerMGWReg are started. The timerMGWReg is triggered circularly to detect the number of registered MGWs. The timerDHStatus is also triggered circularly until the heartbeat is recovered. When the timerDHStatus is overtime and the number of the registered MGWs is equal to 0, the master server is transferred into the SLAVE state, and the Mc interface is closed, and the gateway is driven to another server of a dual-homing system.

The above Step S20 may include: the timer timerMGWReg in the slave server is started, cycle detection of the number of the registered MGWs is triggered, and when the number of the registered MGWs is equal to a preset media gateway number threshold countActiveMGW, the slave server is transferred into the MASTER state.

In one embodiment, the above Step S20 specifically includes: when the slave server discovers that the heartbeat is interrupted, the timerDHStatus is started. When the timer is overtime, then the slave server is transferred into the TEMP state. In the TEMP state, the Mc interface is opened, the registration of the MGW is waited. And the timerMGWReg and the timerDHStatus are started. The timerMGWReg triggers circle detection of the number of the registered MGWs, and when the number of the registered MGWs is equal to countActiveMGW, the server is transferred into the MASTER state. The timerDHStatus is overtime, then the TEMP state is switched to the SLAVE state, at this time the Mc interface is closed, the gateway is driven to another server of the dual-homing system.

With reference to Table 1 below, a switching mechanism of the dual-homing server among the MASTER state, the SLAVE state and the TEMP state is shown below:

**Table 1**

| Current state | Working mode | Heartbeat | Operation of a home terminal |
|---|---|---|---|
| Master machine | Automatic | Interrupted | • Starting timerDHStatus, until the heartbeat is recovered |
| | | | • In timerDHStatus, starting timerMGWReg, and detecting circularly the number of registered MGWs. If the |
| | | | number of the registered MGWs is 0, Master machine is switched to a SLAVE state |
| Slave machine | Automatic | Interrupted | • Starting timerDHStatus until the heartbeat is recovered. The server is switched between the SLAVE state and the TEMP state |
| | | | • In the TEMP state, starting timerMGWReg, and detecting circularly the number of registered MGWs. If the number of the registered MGWs is countActiveMGW, Slave machine is switched to a MASTER state |

With reference to Fig. 2, the switching mechanism through which the dual-homing server is switched among the MASTER state, the SLAVE state, and the TEMP state is specifically: when three conditions, namely the heartbeat is interrupted, the timer timerDHStatus is overtime, and the number of the registered MGWs is 0, are met, the MASTER state is transferred into the SLAVE state.

Bi-directional transfer between the SLAVE state and the TEMP state may be performed: in the condition that the heartbeat is interrupted and timerDHStatus is overtime, the SLAVE state is transferred into the TEMP state to open the Mc interface. When timerDHStatus is overtime and the number of the registered MGWs < countActiveMGW, the TEMP state is transferred back to the SLAVE state to close the Mc interface. In the TEMP state, when it is detected that the number of the registered MGWs is equal to countActiveMGW, the TEMP state is transferred into the MASTER state, and the dual-homing automatic switching is completed.

In order to guarantee accuracy of a switching judgment, two system security alarms are needed to be set:
1. In a non-switching phase, when it is detected that the number of actually registered MGWs is not in accord with countActiveMGW, then a security alarm is given, consistency between the number of the actually registered MGWs and countActiveMGW is kept by an operation and maintenance staff by eliminating a failure of the Mc interface or modifying a configuration of countActiveMGW;
2. When the countActiveMGW configured for the master server is not in accord with that configured for the slave server (a countActiveMGW value of an opposite office may be transmitted through the heartbeat coupling), then the security alarm is given, and the consistency of this configuration is guaranteed by the operation and maintenance staff.

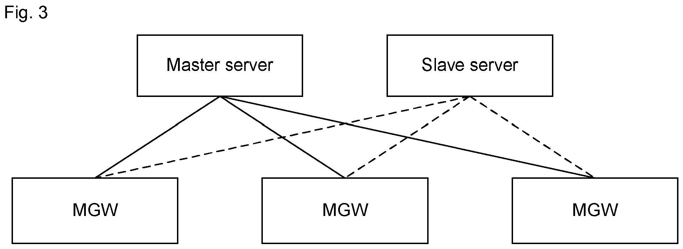

The present disclosure further provides a system for performing dual-homing automatic switching judgment according to the number of registered MGWs, which may implement the above method. With reference to Fig. 3, this system includes a master server and a slave server, wherein
the master server is provided with a switching judgment mechanism judgment module which is configured to, when it is detected that heartbeat coupling between the master server and the slave server is interrupted, trigger a switching judgment mechanism about whether to transfer a state of the master server into a SLAVE state; and
the slave server is provided with a switching judgment mechanism execution module which is configured to detect the number of MGWs registered to the slave server when the slave server detects that the heartbeat coupling between the master server and the slave server is interrupted, and if the detected number of the MGWs reaches a threshold, then transfer a state of the slave server into a MASTER state to make the slave server take over responsibility of the plurality of MGWs.

In the embodiment of the present disclosure, a working principle and an implementing method of the system for performing dual-homing automatic switching judgment according to the number of registered MGWs may be referred in Fig. 1 and be referred by the embodiment of the above method.

In the embodiment of the present disclosure, the switching judgment mechanism judgment module is further configured to:
when it is detected that a heartbeat is interrupted, start a dual-homing state management timer timerDHStatus and a media gateway registration detection timer timerMGWReg, and when the timerDHStatus is overtime and the number of the registered MGWs is 0, transfer the master server into a SLAVE state, close a Mc interface, and drive a gateway to the slave server.

Preferably, the switching judgment mechanism execution module is further configured to:
start the timerMGWReg in the slave server, trigger cycle detection of the number of the registered MGWs, and when the number of the registered MGWs is equal to a preset media gateway number threshold countActiveMGW, transfer the slave server into the MASTER state.

Preferably, the slave server may further include:
a heartbeat detection module, configured to detect a heartbeat between the slave server and another server; and
the switching judgment mechanism execution module is further configured to:
   when it is detected that the heartbeat is interrupted, start the timerDHStatus in the slave server; if the timer is overtime, then transfer the slave server into a TEMP state, and in the TEMP state, open the Mc interface and wait for registration of the MGW; and start the timerMGWReg and the timerDHStatus, trigger cycle detection of the number of the registered MGWs through the timerMGWReg; when the number of the registered MGWs is equal to the countActiveMGW, transfer the slave server into the MASTER state; if the timerDHStatus is overtime, then switch from the TEMP state back to the SLAVE state, and at this time, close the Mc interface and drive the MGW to another server of a dual-homing system.

Preferably, the above system may further include an alarm device configured to:
in a non-switching phase, if it is detected that the number of actually registered MGWs is not in accord with a countActiveMGW, give a security alarm; or
when it is detected that a countActiveMGW configured for the master server is not in accord with a countActiveMGW configured for the slave server, give a security alarm.

Specifically, the application scene of the system of the present disclosure is exampled as follows:
A dual-homing disaster recovery system of a certain city includes an MSCA and an MSCB. The MSCA is a MASTER, and the MSCB is a SLAVE. A threshold countActiveMGW of the number of operating MGWs is set as 3. Four MGWs governed by MSCA and MSCB are MGW1, MGW2, MGW3, and MGW4 separately. One day, MGW1 generates a network failure and quits a service. After MSCA detects that MGW1 fails, MSCA detects a state of a heartbeat between MSCA and MSCB, and if the heartbeat is normal, then MSCA does not trigger the switching judgment mechanism of the slave server, and switching may not occur; if at this time the heartbeat state is abnormal, then MSCA judges the states of MGW1, MGW2, MGW3, and MGW4, and discovers that only MGW1 is abnormal, then MSCA does not close the Mc interface and is degraded to the SLAVE state. At the same time, after MSCB detects that the heartbeat is abnormal, MSCB will open the Mc interface and wait for registration of the gateway, and if a network from MGW1 to MSCB is normal and MGW1can be registered with MSCB, but the number of the operating MGWs is not equal to 3, the switching of MSCB will not occur and MSCB will not be upgraded to the MASTER state, and MSCB will open and close the Mc interface periodically. After the network from MGW1 to MSCA is recovered to a normal state, MGW1 will be registered to MSCA, avoiding unnecessary switching.

All those described above are only preferred embodiments of the present disclosure, and are not therefore used to limit the patent protection scope of the present disclosure. All equivalent structures or equivalent process alternations made by using content of the description and the accompanied drawings of the present disclosure, or applied in other relevant technical fields directly or indirectly, shall in the same way be included in the patent protection scope of the present disclosure.

### INDUSTRIAL APPLICABILITY

A technical scheme of the present disclosure judges the number of registered MGWs and then performs switching only when the number of the MGWs registered to the slave server exceeds a threshold. This method is proposed from a full-system perspective to implement soft switching, which can safely and effectively decide a switch timing and avoid a defect of an existing method. On a premise that extra system consumption is not generated, abnormal switching or a dual-MASTER state caused in a situation in which a slave server gets a transient failure, and exceptions of the heartbeat coupling and Mc interface coupling emerge simultaneously, and etc., is solved, and security and robustness of a switching judgment method are improved.

## Claims

1. A method for performing dual-homing automatic switching judgment according to the number of registered Media Gateways MGWs, comprising the following steps:
triggering, by a master server, a switching judgment mechanism about whether to transfer a state of the master server into a SLAVE state when the master server detects that heartbeat coupling between the master server and the slave server is interrupted, wherein the master server operates a plurality of MGWs, and the slave server takes over responsibility of the plurality of MGWs when a state of the slave server is transferred into a MASTER state (S10); and
detecting, by the slave server, the number of MGWs registered to the slave server when the slave server detects that the heartbeat coupling between the master server and the slave server is interrupted, and if the number of the MGWs registered to the slave server reaches a threshold, then transferring the state of the slave server into the MASTER state to make the slave server take over responsibility of the plurality of MGWs (S20).

2. The method for performing dual-homing automatic switching judgment according to the number of registered MGWs according to claim 1, wherein the step (S10) of triggering, by a master server, a switching judgment mechanism about whether to transfer a state of the master server into a SLAVE state when the master server detects that heartbeat coupling between the master server and the slave server is interrupted comprises:
when the master server detects that a heartbeat is interrupted, starting a dual-homing state management timer timerDHStatus and a media gateway registration detection timer timerMGWReg, and when the timerDHStatus is overtime and the number of the registered MGWs is 0, transferring the master server into the SLAVE state, closing a Mc interface, and driving a MGW to the slave server.

3. The method for performing dual-homing automatic switching judgment according to the number of registered MGWs according to claim 1, wherein the step (S20) of detecting, by the slave server, the number of the MGWs registered to the slave server when the slave server detects that the heartbeat coupling between the master server and the slave server is interrupted, and if the number of the MGWs reaches the threshold, then transferring the state of the slave server into the MASTER state to make the slave server take over the responsibility of the plurality of MGWs comprises:
starting a timer timerMGWReg in the slave server, triggering cycle detection of the number of the registered MGWs, and when the number of the registered MGWs is equal to a preset media gateway number threshold countActiveMGW, transferring the slave server into the MASTER state.

4. The method for performing dual-homing automatic switching judgment according to the number of MGWs according to claim 1, wherein the step (S20) of detecting, by the slave server, the number of the MGWs registered to the slave server when the slave server detects that the heartbeat coupling between the master server and the slave server is interrupted, and if the number of the MGWs reaches the threshold, then transferring the state of the slave server into the MASTER state to make the slave server take over the responsibility of the plurality of MGWs comprises:
detecting, by the slave server, a heartbeat between the slave server and another server; and
when the slave server detects that the heartbeat is interrupted, starting a timer timerDHStatus in the slave server; if the timer is overtime, then transferring the slave server into a TEMP state, and in the TEMP state, opening a Mc interface and waiting for registration of the MGW; and starting a timer timerMGWReg and the timer timerDHStatus, triggering cycle detection of the number of the registered MGWs through the timer timerMGWReg; when the number of the registered MGWs is equal to a threshold countActiveMGW, transferring the slave server into the MASTER state; if the timer timerDHStatus is overtime, then switching from the TEMP state back to the SLAVE state, and at this time, closing the Mc interface and driving the MGW to another server of a dual-homing system.

5. The method for performing dual-homing automatic switching judgment according to the number of registered MGWs according to any one of claims 1-4, further comprising:
in a non-switching phase, if it is detected that the number of actually registered MGWs is not in accord with a threshold countActiveMGW, giving a security alarm; or
when it is detected that a countActiveMGW configured for the master server is not in accord with a countActiveMGW configured for the slave server, giving a security alarm.

6. A system for performing dual-homing automatic switching judgment according to the number of registered Media Gateways MGWs, comprising a master server and a slave server,
the master server is provided with a switching judgment mechanism judgment module which is configured to, when it is detected that heartbeat coupling between the master server and the slave server is interrupted, trigger a switching judgment mechanism about whether to transfer a state of the master server into a SLAVE state, wherein the master server operates a plurality of MGWs, and the slave server takes over responsibility of the plurality of MGWs when a state of the slave server is transferred into a MASTER state; and
the slave server is provided with a switching judgment mechanism execution module which is configured to detect the number of MGWs registered to the slave server when the slave server detects that heartbeat coupling between the master server and the slave server is interrupted, and if the number of the MGWs registered to the slave serverreaches a threshold, then transfer the state of the slave server into the MASTER state to make the slave server take over responsibility of the plurality of MGWs.

7. The system according to claim 6, wherein the switching judgment mechanism judgment module is further configured to:
when it is detected that a heartbeat is interrupted, start a dual-homing state management timer timerDHStatus and a media gateway registration detection timer timerMGWReg, and when the timerDHStatus is overtime and the number of the registered MGWs is 0, transfer the master server into a SLAVE state, close a Mc interface, and drive a gateway to the slave server.

8. The system according to claim 6, wherein the switching judgment mechanism execution module is further configured to:
start a timer timerMGWReg in the slave server, trigger cycle detection of the number of the registered MGWs, and when the number of the registered MGWs is equal to a preset media gateway number threshold countActiveMGW, transfer the slave server into the MASTER state.

9. The system according to any one of claims 6-8, wherein the slave server further comprises:
a heartbeat detection module, configured to detect a heartbeat between the slave server and another server; and
the switching judgment mechanism execution module is further configured to when it is detected that the heartbeat is interrupted, start a timer timerDHStatus in the slave server; if the timer is overtime, then transfer the slave server into a TEMP state, and in the TEMP state, open a Mc interface and wait for registration of the MGW; and start a timer timerMGWReg and the timer timerDHStatus, trigger cycle detection of the number of the registered MGWs through the timer timerMGWReg; when the number of the registered MGWs is equal to a threshold countActiveMGW, transfer the slave server into the MASTER state; if the timer timerDHStatus is overtime, then switch from the TEMP state back to the SLAVE state, and at this time, close the Mc interface and drive the MGW to another server of a dual-homing system.

10. The system according to claim 9, further comprising an alarm device configured to:
in a non-switching phase, if it is detected that the number of actually registered MGWs is not in accord with a threshold countActiveMGW, give a security alarm; or
when it is detected that a countActiveMGW configured for the master server is not in accord with a countActiveMGW configured for the slave server, give a security alarm.

## Patentansprüche

1. Verfahren zum Durchführen von Dual-Homing-Automatik-Umschaltung-Beurteilung gemäß der Anzahl der registrierten Media-Gateways MGWs, das die folgenden Schritte beinhaltet: Auslösen, durch einen Master-Server, eines Umschaltung-Beurteilungsmechanismus dahingehend, ob ein Status des Master-Servers in einen SLAVE-Status zu transferieren ist, wenn der Master-Server detektiert, dass Heartbeat-Kopplung zwischen dem Master-Server und dem Slave-Server unterbrochen ist, wobei der Master-Server eine Vielzahl von MGWs betreibt, und der Slave-Server die Verantwortung für die Vielzahl von MGWs übernimmt, wenn ein Status des Slave-Servers in einen MASTER-Status transferiert wird (S10); und Detektieren, durch den Slave-Server, der Anzahl der MGWs, die am Slave-Server registriert sind, wenn der Slave-Server detektiert, dass die Heartbeat-Kopplung zwischen dem Master-Server und dem Slave-Server unterbrochen ist, und falls die Anzahl der MGWs, die am Slave-Server registriert sind, einen Grenzwert erreicht, dann Transferieren des Status des Slave-Servers in den MASTER-Status, sodass der Slave-Server die Verantwortung für die Vielzahl von MGWs übernimmt (S20).

2. Verfahren zum Durchführen von Dual-Homing-Automatik-Umschaltung-Beurteilung gemäß der Anzahl der registrierten MGWs gemäß Anspruch 1, wobei der Schritt (S10) des Auslösens, durch einen Master-Server, eines Umschaltung-Beurteilungsmechanismus dahingehend, ob ein Status des Master-Servers in einen SLAVE-Status zu transferieren ist, wenn der Master-Server detektiert, dass Heartbeat-Kopplung zwischen dem Master-Server und dem Slave-Server unterbrochen ist, Folgendes beinhaltet:
wenn der Master-Server detektiert, dass ein Heartbeat unterbrochen ist, Starten eines Dual-Homing-Statusverwaltungs-Zeitgebers timerDHStatus und eines Media-Gateway-Registrierungsdetektions-Zeitgebers timerMGWReg, und wenn der timerDHStatus überzeit ist und die Anzahl der registrierten MGWs 0 ist, Transferieren des Master-Servers in den SLAVE-Status, Schließen einer Mc-Schnittstelle und Treiben eines MGWs zum Slave-Server.

3. Verfahren zum Durchführen von Dual-Homing-Automatik-Umschaltung-Beurteilung gemäß der Anzahl der registrierten MGWs gemäß Anspruch 1, wobei der Schritt (S20) des Detektierens, durch den Slave-Server, der Anzahl der MGWs, die am Slave-Server registriert sind, wenn der Slave-Server detektiert, dass die Heartbeat-Kopplung zwischen dem Master-Server und dem Slave-Server unterbrochen ist, und falls die Anzahl der MGWs den Grenzwert erreicht, dann Transferierens des Status des Slave-Servers in den MASTER-Status, sodass der Slave-Server die Verantwortung für die Vielzahl von MGWs übernimmt, Folgendes beinhaltet:
Starten eines Zeitgebers timerMGWReg im Slave-Server, Auslösen der Zyklusdetektion der Anzahl der registrierten MGWs, und wenn die Anzahl der registrierten MGWs gleich einem voreingestellten Media-Gateway-Anzahl-Grenzwert countActiveMGW ist, Transferieren das Slave-Servers in den MASTER-Status.

4. Verfahren zum Durchführen von Dual-Homing-Automatik-Umschaltung-Beurteilung gemäß der Anzahl der MGWs gemäß Anspruch 1, wobei der Schritt (S20) des Detektierens, durch den Slave-Server, der Anzahl der MGWs, die am Slave-Server registriert sind, wenn der Slave-Server detektiert, dass die Heartbeat-Kopplung zwischen dem Master-Server und dem Slave-Server unterbrochen ist, und falls die Anzahl der MGWs den Grenzwert erreicht, dann Transferierens des Status des Slave-Servers in den MASTER-Status, sodass der Slave-Server die Verantwortung für die Vielzahl von MGWs übernimmt, Folgendes beinhaltet:
Detektieren, durch den Slave-Server, eines Heartbeats zwischen dem Slave-Server und einem anderen Server; und
wenn der Slave-Server detektiert, dass der Heartbeat unterbrochen ist, Starten eines Zeitgebers timerDHStatus im Slave-Server; falls der Zeitgeber überzeit ist, dann Transferieren des Slave-Servers in einen TEMP-Status, und im TEMP-Status, Öffnen einer Mc-Schnittstelle und Warten auf die Registrierung des MGWs; und Starten eines Zeitgebers timerMGWReg und des Zeitgebers timerDHStatus, Auslösen der Zyklusdetektion der Anzahl der registrierten MGWs durch den Zeitgeber timerMGWReg; wenn die Anzahl der registrierten MGWs gleich einem Grenzwert countActiveMGW ist, Transferieren des Slave-Servers in den MASTER-Status; falls der Zeitgeber timerDHStatus überzeit ist, dann Umschalten vom TEMP-Status zurück auf den SLA VE-Status, und in diesem Zeitpunkt, Schließen der Mc-Schnittstelle und Treiben des MGWs zu einem anderen Server eines Dual-Homing-Systems.

5. Verfahren zum Durchführen von Dual-Homing-Automatik-Umschaltung-Beurteilung gemäß der Anzahl der registrierten Media-Gateways MGWs gemäß einem der Ansprüche 1-4, das ferner Folgendes beinhaltet:
in einer Nicht-Umschaltungsphase, falls detektiert wird, dass die Anzahl der tatsächlich registrierten MGWs nicht mit einem Grenzwert countActiveMGW übereinstimmt, Ausgeben eines Sicherheitsalarms; oder
wenn detektiert wird, dass ein für den Master-Server konfigurierter countActiveMGW nicht mit einem für den Slave-Server konfigurierten countActiveMGW übereinstimmt, Ausgeben eines Sicherheitsalarms.

6. System zum Durchführen von Dual-Homing-Automatik-Umschaltung-Beurteilung gemäß der Anzahl der registrierten Media-Gateways MGWs, das einen Master-Server und einen Slave-Server beinhaltet,
wobei der Master-Server mit einem Umschaltung-Beurteilungsmechanismus-Beurteilungsmodul bereitgestellt ist, das konfiguriert ist, um, wenn detektiert wird, dass die Heartbeat-Kopplung zwischen dem Master-Server und dem Slave-Server unterbrochen ist, einen Umschaltung-Beurteilungsmechanismus dahingehend auszulösen, ob ein Status des Master-Servers in einen SLAVE-Status zu transferieren ist, wobei der Master-Server eine Vielzahl von MGWs betreibt, und der Slave-Server die Verantwortung für die Vielzahl von MGWs übernimmt, wenn ein Status des Slave-Servers in einen MASTER-Status transferiert wird; und
wobei der Slave-Server mit einem Umschaltung-Beurteilungsmechanismus-Ausführungsmodul bereitgestellt ist, das konfiguriert ist, um die Anzahl der MGWs, die am Slave-Server registriert sind, zu detektieren, wenn der Slave-Server detektiert, dass die Heartbeat-Kopplung zwischen dem Master-Server und dem Slave-Server unterbrochen ist, und, falls die Anzahl der MGWs, die am Slave-Server registriert sind, einen Grenzwert erreicht, dann den Status des Slave-Servers in den MASTER-Status zu transferieren, sodass der Slave-Server die Verantwortung für die Vielzahl von MGWs übernimmt.

7. System gemäß Anspruch 6, wobei das Umschaltung-Beurteilungsmechanismus-Beurteilungsmodul ferner konfiguriert ist, um:
wenn detektiert wird, dass ein Heartbeat unterbrochen ist, einen Dual-Homing-Statusverwaltungs-Zeitgeber timerDHStatus und einen Media-Gateway-Registrierungsdetektions-Zeitgeber timerMGWReg zu starten, und wenn der timerDHStatus überzeit ist und die Anzahl der registrierten MGWs 0 ist, den Master-Servers in einen SLAVE-Status zu transferieren, eine Mc-Schnittstelle zu schließen und einen Gateway zum Slave-Server zu treiben.

8. System gemäß Anspruch 6, wobei das Umschaltung-Beurteilungsmechanismus-Ausführungsmodul ferner konfiguriert ist, um:
einen Zeitgeber timerMGWReg im Slave-Server zu starten, die Zyklusdetektion der Anzahl der registrierten MGWs auszulösen, und wenn die Anzahl der registrierten MGWs gleich einem voreingestellten Media-Gateway-Anzahl-Grenzwert countActiveMGW ist, den Slave-Server in den MASTER-Status zu transferieren.

9. System gemäß einem der Ansprüche 6-8, wobei der Slave-Server ferner Folgendes beinhaltet.
ein Heartbeat-Detektionsmodul, das konfiguriert ist, um einen Heartbeat zwischen dem Slave-Server und einem anderen Server zu detektieren; und
wobei das Umschaltung-Beurteilungsmechanismus-Ausführungsmodul ferner konfiguriert ist, um, wenn detektiert wird, dass der Heartbeat unterbrochen ist, einen Zeitgeber timerDHStatus im Slave-Server zu starten; falls der Zeitgeber überzeit ist, dann den Slave-Server in einen TEMP-Status zu transferieren, und im TEMP-Status, eine Mc-Schnittstelle zu öffnen und auf die Registrierung des MGWs zu warten; und einen Zeitgeber timerMGWReg und den Zeitgeber timerDHStatus zu starten, die Zyklusdetektion der Anzahl der registrierten MGWs durch den Zeitgeber timerMGWReg auszulösen; wenn die Anzahl der registrierten MGWs gleich einem Grenzwert countActiveMGW ist, den Slave-Server in den MASTER-Status zu transferieren; falls der Zeitgeber timerDHStatus überzeit ist, dann vom TEMP-Status zurück auf den SLAVE-Status umzuschalten, und in diesem Zeitpunkt, die Mc-Schnittstelle zu schließen und den MGW zu einem anderen Server eines Dual-Homing-Systems zu treiben.

10. System gemäß Anspruch 9, das ferner eine Alarmvorrichtung beinhaltet, die konfiguriert ist, um:
in einer Nicht-Umschaltungsphase, falls detektiert wird, dass die Anzahl der tatsächlich registrierten MGWs nicht mit einem Grenzwert countActiveMGW übereinstimmt, einen Sicherheitsalarm auszugeben; oder
wenn detektiert wird, dass ein für den Master-Server konfigurierter countActiveMGW nicht mit einem für den Slave-Server konfigurierten countActiveMGW übereinstimmt, einen Sicherheitsalarm auszugeben.

## Revendications

1. Méthode d'exécution d'une décision de commutation automatique à double anneau en fonction du nombre de passerelles multimédia enregistrées, comprenant les étapes suivantes :
déclenchement, par un serveur maître, d'un mécanisme de décision de commutation concernant le transfert éventuel d'un état du serveur maître à un état ESCLAVE lorsque le serveur maître détecte l'interruption du couplage « battement de coeur » entre le serveur maître et le serveur esclave, le serveur maître commandant une pluralité de passerelles multimédia, et le serveur esclave prenant en charge la pluralité de passerelles multimédia, lorsqu'un état du serveur esclave est transféré à un état MAÎTRE (S10) ; et
détection, par le serveur esclave, du nombre de passerelles multimédia enregistrées au serveur esclave, lorsque le serveur esclave détecte l'interruption du couplage « battement de coeur » entre le serveur maître et le serveur esclave, et si le nombre de passerelles multimédia enregistrées au serveur esclave atteint une valeur seuil,
transfert alors de l'état du serveur esclave à l'état MAÎTRE, de sorte que le serveur esclave prenne en charge la pluralité de passerelles multimédia (S20).

2. Méthode d'exécution d'une décision de commutation automatique à double anneau en fonction du nombre de passerelles multimédia enregistrées selon la revendication 1, l'étape (S10) de déclenchement, par un serveur maître, d'un mécanisme de décision de commutation sur le transfert éventuel d'un état du serveur maître en un état ESCLAVE lorsque le serveur maître détecte l'interruption du couplage « battement de coeur » entre le serveur maître et le serveur esclave comprenant :
lorsque le serveur maître détecte l'interruption d'un « battement de coeur », le déclenchement d'une minuterie timerDHStatus de gestion de l'état à double anneau, ainsi que d'une minuterie timerMGWReg de détection de l'enregistrement de passerelle média, et en cas de surtemps de la minuterie timerDHStatus, le nombre de passerelles multimédia enregistrées étant 0, transfert du serveur maître à l'état ESCLAVE, fermeture d'une interface Mc, et entraînement d'une passerelle multimédia au serveur esclave.

3. Méthode d'exécution d'une décision de commutation automatique à double anneau en fonction du nombre de passerelles multimédia enregistrées selon la revendication 1, l'étape (S20) de détection, par le serveur esclave, du nombre de passerelles multimédia enregistrées au serveur esclave lors de la détection, par le serveur esclave, de l'interruption du couplage « battement de coeur » entre le serveur maître et par le serveur esclave, et, si le nombre de passerelles multimédia atteint le seuil, de transfert de l'état du serveur esclave à l'état MAÎTRE de sorte que le serveur esclave prenne en charge la pluralité de passerelles multimédia, comprenant :
le lancement d'une minuterie timerMGWReg dans le serveur esclave, le déclenchement d'un cycle de détection du nombre de passerelles multimédia enregistrées, et, lorsque le nombre de passerelles multimédia enregistrées est égal au seuil du nombre de passerelles multimédia préréglé countActiveMGW, le transfert du serveur esclave a l'état MAÎTRE.

4. d'exécution d'une décision de commutation automatique à double anneau en fonction du nombre de passerelles multimédia enregistrées selon la revendication 1, l'étape (S20) de détection, par le serveur esclave, du nombre de passerelles multimédia enregistrées au serveur esclave lors de la détection, par le serveur esclave, de l'interruption du couplage « battement de coeur » entre le serveur maître et le serveur esclave, et, si le nombre de passerelles multimédia atteint le seuil, de transfert de l'état du serveur esclave à l'état MAÎTRE, de sorte que le serveur esclave prenne en charge la pluralité de passerelles multimédia, comprenant :
la détection, par le serveur esclave, d'un « battement de coeur » entre le serveur esclave et un autre serveur ; et
lorsque le serveur esclave détecte l'interruption du « battement de coeur », le lancement d'une minuterie timerDHStatus dans le serveur esclave ; si la minuterie est en surtemps, transfert du serveur esclave dans un état TEMP, et, une fois dans l'état TEMP, ouverture d'une interface Mc et attente de l'enregistrement de la passerelle multimédia ; et lancement d'une minuterie timerMGWReg et de la minuterie timerDHStatus, en déclenchant une détection cyclique du nombre de passerelles multimédia détectées par le biais de la minuterie timerMGWReg ; lorsque le nombre de passerelles multimédia enregistrées est égal à un seuil countActiveMGW, transfert du serveur esclave à l'état MAÎTRE ; et si la minuterie timerDHStatus est en surtemps, repassage de l'état TEMP à l'état ESCLAVE, et, à ce moment, fermeture de l'interface Mc et entraînement de la passerelle multimédia à un autre serveur du système à double anneau.

5. Méthode d'exécution d'une décision de commutation automatique à double anneau en fonction du nombre de passerelles multimédia enregistrées selon une quelconque des revendications 1 à 4, comprenant en outre :
dans une phase de non commutation, si l'on détecte que le nombre de passerelles multimédia effectivement enregistrées ne correspond pas à un seuil countActiveMGW, le déclenchement d'une alarme de sécurité, ou
lorsque l'on détecte qu'un countActiveMGW configuré pour le server maître n'est pas en accord avec un countActiveMGW configuré pour le serveur esclave, le déclenchement d'une alarme de sécurité.

6. Système d'exécution d'une décision de commutation automatique à double anneau en fonction du nombre de passerelles multimédia enregistrées, comprenant un serveur maître et un serveur esclave,
le serveur maître étant doté d'un module de décision du mécanisme de décision de commutation, configuré, en cas de détection de l'interruption d'un couplage « battement de coeur » entre le serveur maître et le serveur esclave, pour déclencher un mécanisme de décision de commutation sur le transfert éventuel d'un état du serveur maître dans un état ESCLAVE, le serveur maître commandant une pluralité de passerelles multimédia, et le serveur esclave prenant à sa charge la pluralité de passerelles multimédia lors du transfert d'un état du serveur esclave dans un état MAÎTRE ; et
le serveur esclave étant doté d'un module d'exécution du mécanisme de décision de commutation, configuré pour détecter le nombre de passerelles multimédia enregistrées au serveur esclave lorsque ce dernier détecte l'interruption de couplage « battement de coeur » entre le serveur maître et le serveur esclave, et, si le nombre de passerelles multimédia enregistrées au serveur esclave atteint une valeur seuil, pour transférer alors l'état du serveur esclave à celui de MAÎTRE de sorte que le serveur esclave prenne en charge la pluralité de passerelles multimédia.

7. Système selon la revendication 6, le module de décision du mécanisme de décision de commutation étant configuré en outre de façon
à déclencher, en cas de détection de l'interruption d'un « battement de coeur », une minuterie timerDHStatus de gestion de l'état de double anneau et une minuterie timerMGWReg de détection de l'enregistrement de passerelles multimédia, et, en cas de surtemps de la minuterie timerDHStatus, et le nombre de passerelles multimédia enregistrées étant 0, à effectuer le transfert du serveur maître à l'état ESCLAVE, la fermeture d'une interface Mc, et l'entraînement d'une passerelle au serveur esclave.

8. Système selon la revendication 6, le module d'exécution du mécanisme de décision de commutation étant configuré en outre de façon à
lancer une minuterie timerMGWReg dans le serveur esclave, déclencher un cycle de détection du nombre de passerelles multimédia enregistrées, et, lorsque le nombre de passerelles multimédia enregistrées est égal à un seuil du nombre de passerelles multimédia préréglé countActiveMGW, transférer le serveur esclave à l'état MAÎTRE.

9. Système selon une quelconque des revendications 6 à 8, le serveur esclave comprenant en outre :
un module de détection de « battement de coeur », configuré pour détecter un « battement de coeur » entre le serveur esclave et un autre serveur ; et
le module d'exécution du mécanisme de décision de commutation étant configuré en outre de façon à lancer, lors de la détection d'une interruption du « battement de coeur », une minuterie timerDHStatus dans le serveur esclave ; en cas de surtemps de la minuterie, à transférer le serveur esclave dans un état TEMP, et, dans l'état TEMP, à ouvrir une interface Mc, et attendre l'enregistrement de la passerelle multimédia ; et lancer une minuterie timerMGWReg et la minuterie timerDHStatus, déclencher la détection cyclique du nombre de passerelles multimédia enregistrées par le biais de la minuterie timerMGWReg ; lorsque le nombre de passerelles multimédia enregistrées est égal à un seuil countActiveMGW, transférer le serveur esclave à l'état MAÎTRE ; si la minuterie timerDHStatus est en surtemps, repasser alors de l'état TEMP à l'état ESCLAVE, et à ce moment, fermer l'interface Mc et entraîner la passerelle multimédia vers un autre serveur du système à double anneau.

10. Système selon la revendication 9, comprenant en outre un dispositif d'alarme, configuré pour
déclencher, lorsque l'on détecte, en phase de non commutation, que le nombre de passerelles multimédia effectivement enregistrées ne correspond pas à un seuil countActiveMGW, une alarme de sécurité ; ou
déclencher, lorsqu'il est détecté qu'un countActiveMGW, configuré pour le serveur maître, ne correspond pas à un countActiveMGW configuré pour le serveur esclave, une alarme de sécurité.
